# EUROPÄISCHE PATENTSCHRIFT

(11) **EP 2 935 527 B1**
(45) Veröffentlichungstag und Bekanntmachung des Hinweises auf die Patenterteilung: **01.04.2020**
(21) Anmeldenummer: 13846232.0
(22) Anmeldetag: 17.12.2013
(51) Int. Cl.: C10L 1/02, C11C 3/00

(54) **VERFAHREN ZUR HERSTELLUNG EINES BIO-DIESEL-KRAFTSTOFFES MIT EINEM SPEZIELL AUSGELEGTEM REAKTOR UND (AUTO)KATALYTISCH" WIRKSAMER NANOSKALIG STRUKTURIERTER MATERIALOBERFLÄCHE DES REAKTORS**
METHOD FOR PRODUCING A BIODIESEL FUEL HAVING A SPECIALLY DESIGNED REACTOR AND "AUTOCATALYTICALLY" ACTIVE NANOSCALE STRUCTURED MATERIAL SURFACE OF THE REACTOR
PROCÉDÉ DE PRODUCTION D'UN CARBURANT BIODIESEL À L'AIDE D'UN RÉACTEUR DE CONCEPTION SPÉCIALE, DONT LE MATÉRIAU PRÉSENTE UNE SURFACE À STRUCTURATION NANOMÉTRIQUE AYANT UN EFFET BDQUO(AUTO)CATALYTIQUE"

(30) Priorität: 18.12.2012 AT 13092012
(43) Veröffentlichungstag der Anmeldung: 28.10.2015
(73) Patentinhaber: Nauer, Gerhard, 2103 Langenzersdorf (AT); Schell, Klaus, 8020 Graz (AT)
(72) Erfinder: Nauer, Gerhard, 2103 Langenzersdorf (AT); Schell, Klaus, 8020 Graz (AT)
(74) Vertreter: Vinazzer, Edith
(86) Internationale Anmeldenummer: PCT/AT2013/000201
(87) Internationale Veröffentlichungsnummer: WO 2014/094007

(56) Entgegenhaltungen:
- US-A1- 2009 307 966
- US-A1- 2011 209 389
- SHULI YAN ET AL: "Long term activity of modified ZnO nanoparticles for transesterification", FUEL, Bd. 89, Nr. 10, 1. Oktober 2010 (2010-10-01), Seiten 2844-2852, XP55121389, ISSN: 0016-2361, DOI: 10.1016/j.fuel.2010.05.023

## Beschreibung

Die Erfindung betrifft ein Verfahren zur Herstellung von Biodiesel speziell aus Altspeiseöl, wobei das Rohmaterial in Mischung mit Methanol einem speziell aus "autokatalytisch" wirksamen Material mit nanoskaliger Oberflächenstruktur ausgeführtem und entsprechend ausgelegtem Reaktor zugeführt und bei einer definierten Temperatur bei höheren Drücken umgesetzt wird.

### STAND DER TECHNIK

Biodiesel steht als Bezeichnung für eine Vielzahl von oxidierbaren Kraftstoffen auf der Grundlage von Fettsäurealkylestern. Fettsäureglyceride können aus unterschiedlichsten Rohmaterialien bereitgestellt werden, wobei sowohl nachwachsende agrarische Rohstoff wie Soja, Raps oder auch Fettalgen als auch Abfallprodukte wie gebrauchtes Speiseöl oder unterschiedliche tierische Fette in Frage kommen. Die Umesterung von Fettsäureglyceriden erfolgt nach unterschiedlichen Verfahren, wie sie weiter unten diskutiert werden.

Grundsätzlich kann die Umesterung der zur Verwendung vorgesehenen Öle basenkatalysiert mit einem Alkohol, direkt säurekatalysiert mit Methanol als Alkohol oder über eine Umwandlung der Öle zu Fettsäuren und deren säurenkatalysierte Umsetzung zu den Alkylestern erfolgen.

Die für die Umesterung eingesetzten Alkohole sind meist einwertig und kurzkettig, typischerweise Methanol, Ethanol oder auch Isopropanol. Die sich daher ergebenden alkylierten Ester sind daher Methyl- , Ethyl- oder Isopropanyl-Varianten.

Der Großteil der als Zusatz für die erdölbasierten Dieselkraftstoffe eingesetzten Biodieseloder Alkylester-Varianten wird über die basenkatalysierte Reaktion gewonnen, da diese kostengünstig bei niedriger Temperatur (< 90°C) und geringen Drücken (< 2 bar) durchgeführt werden kann.

Die US 2009/037966 A1 befasst sich mit einem Verfahren zur Herstellung von Biodiesel, bei dem ein heterogenes Katalysatorsystem aus einer Mischung von Zinkoxid (amorphes Zinkoxid und Zinkoxidnanokristalle) und einem zweiten Metalloxid hergestellt wird, der Katalysator mit Öl, Alkohol sowie mit Wasser zu einer Reaktionsmischung vermischt wird, wobei diese Reaktionsmischung auf eine Temperatur von 170 °C bis 220 °C erhitzt wird und nach der Umesterung der Biodiesel vom Katalysator separiert wird. Bei dem aus der US 2011/0209389 A1 bekannten Verfahren wird eine Reaktionsmischung aus Öl, Alkohol und gedopten Titandioxidpartikeln hergestellt. Die Veresterung soll bei Raumtemperatur und atmosphärischem Druck erfolgen. Die nach diesen Verfahren hergestellten Biodiesel eignen sich nicht zur Verwendung in modernen Hochleistungs-Dieselmotoren mit Einspritzdüsen, da die im Biodiesel verbliebenen vorhandenen Zinknanopartikel bzw. Titandioxidpartikel sich insbesondere in den Einspritzdüsen anlagern und diese verlegen können.

In der AT 40666871 B ist z.B. die Umesterung von Fettsäureglyceriden mit einem wässrigem Alkohol unter Verwendung eines basischen, überschüssigen Katalysator beschrieben, Varianten dazu finden sich in den Offenlegungsschriften AT 394374 B, AT 388 743 B.
Als basische Katalysatoren werden bevorzugt NaOH oder KOH verwendet, deren Überschuss in einem weiteren Verfahrensschritt wieder aus dem Reaktionsgemisch abgetrennt werden muss. Die Herstellung verbesserter Biodieselvarianten ist u.a. in der AT 412280 B beschrieben.

Ähnliche Verfahren bzw. Verfahrensvarianten sind u.a. auch in der DE 102 43 700, DE 102 45 758, DE 102 57 250 oder DE 199 08 978 beschrieben.

In einer anderen Verfahrensvariante, offengelegt in der AT 502218 A1, wird ein flüssiger Metallkatalysator, bevorzugt ein Erdalkalisalz einer Carbonsäure, insbesondere ein Magnesiumsalz, mit den Fettsäureglyceriden umgesetzt, wobei bei diesem Verfahren auch Triglyceride aus gebrauchten Speiseölen oder tierischen Fetten zu Biodieselvarianten mit guten Ausbeuten umgeestert werden können.

Eine Verfahrensvariante unter Verwendung von Palmöl und Palmstearin wird in der AT 504745 A1 offengelegt.

Heterogene Katalysatorsysteme zur Herstellung von "Biodiesel" sind in der EP-A-1477551 beschrieben, und in der US 6 818 026 wird die Verwendung von MgO als Festkatalysator für die Umesterung beschrieben, ebenso in der WO 2008/012275A1 die Verwendung von Erdalkalimetalloxiden und Karbonaten mit Verweilzeiten zwischen 1 und 40 Minuten.
In der WO 2009/002880A1 wird ebenfalls ein Reaktor mit Metalloxiden oder Silikaten (Elemente Zr, Ti, Mn oder Ni und auch Al, Si, Mg und Ca) beschrieben, wo eine poröse Struktur mehr als die Hälfte des Reaktorvolumens ausfüllt.

In der US 6 187 939 wird ein katalysatorloses Verfahren im "Batch"-Betrieb unter Verwendung von ein- oder mehrwertigen Alkoholen offengelegt, wobei hier die Nachteile des notwendigen hohen Drucks und der hohen Temperatur zur Erreichung eines definierten superkritischen Zustands der Mischphase nicht gelöst werden konnten. Zudem ist für den beschriebenen Reaktionsablauf das Einleiten von Schutzgas in den Autoklaven notwendig.

Als Nebenprodukte fallen in fast allen Verfahren Glycerin und Seifen in unterschiedlicher Reinheit an. Das Glycerin muss dann meist mit Destillationsschritten zu brauchbaren Qualitäten gereinigt werden.

Als wesentlicher Nachteil dieser klassischen Verfahren muss die Verunreinigung der Reaktionsprodukte mit den eingesetzten Katalysatoren angemerkt werden, da diese "Verunreinigungen" in weiteren Verfahrensstufen durch entsprechende Neutralisations- und Reinigungsschritte wieder entfernt werden müssen. Dies gilt auch, zwar in verminderter Form, beim Einsatz flüssiger Metallkatalysatoren auf Basis der Erdalkalisalze von Karbonsäuren oder bei der Verwendung von festen Katalysatoren auf Basis von Oxiden oder Karbonaten der Erdalkaligruppe.

### AUFGABE

Die Problemstellung und Aufgabe der vorliegenden Erfindung besteht darin, ein Verfahren bereitzustellen, mit welchem in einer wirtschaftlichen Art und Weise kontinuierlich eine Biodieselvariante aus freien Fettsäuren, wie sie insbesondere in Altspeiseölen, Altspeisefetten und unterschiedlichen tierischen Fetten vorliegen, durch Reaktion mit einem Alkohol, bevorzugt Methanol, hergestellt werden kann, die frei von katalytisch eingebrachten Verunreinigungen ist und den einschlägigen Qualitäts-Normen für Biodiesel entspricht.

### LÖSUNG DER AUFGABE

Die Lösung der Aufgabe erfolgt durch ein Verfahren mit den Merkmalen des Anspruches 1.

Es wird das Rohmaterial, Altspeiseöl, in einem geeigneten Gefäß, z.B. einem Rührkessel, mit Methanol im Überschuss gemischt und es wird eine Emulsion hergestellt.

Umfangreiche Versuche zeigten, dass das beste Mischungsverhältnis für die weitere Verarbeitung zwischen 20 und 50 Mol Methanol für 1 Mol Altspeiseöl liegt, erfindungsgemäß bevorzugt zwischen 38 und 42 Mol Methanol für 1 Mol Altspeiseöl.

Diese Emulsion wird dann in einem weiteren Verfahrensschritt mit Hilfe einer geeigneten Pumpvorrichtung auf einen Druck zwischen 250 und 300 bar (25 und 30 MPa) verdichtet, wobei erfindungsgemäß Drücke zwischen 290 und 310 bar (29 und 31 MPa) bevorzugt werden.

Diese verdichtete Emulsion wird dann über einen zweistufigen, meist elektrisch beheizten Wärmetauscher auf Temperaturen zwischen 250°C und 320°C erhitzt, wobei erfindungsgemäß Temperaturen zwischen 260°C und 310°C bevorzugt eingesetzt werden.

In weiterer Folge wird diese verdichtete und erhitzte Emulsion in einen horizontal angeordneten, erfindungsgemäß als Rohr ausgeführten ebenfalls beheizten Reaktor geleitet, wo die Emulsion eine definierte Zeit auf Reaktionstemperatur gehalten wird. Die Reaktionszeit bewegt sich zwischen 0.1 und 10 Minuten, wobei erfindungsgemäß bevorzugt eine Reaktionszeit zwischen 20 und 400 Sekunden eingestellt wird, die durch die Flussgeschwindigkeit der Emulsion und die Länge des Reaktorrohres definiert wird.

Die Überwachung der Temperatur des Emulsionsgemisches und des Reaktorrohres erfolgt mittels geeignet angebrachter Temperatursensoren und elektronischer Steuerung und Regelung.

Der Reaktor ist so ausgelegt, dass das Methanol bei den oben angeführten Reaktionsbedingungen aufgrund der signifikant erhöhten Löslichkeit der verwendeten Öle im Methanol mit einer im Vergleich zu herkömmlichen Verfahren wesentlich höheren Geschwindigkeit in den ablaufenden chemischen Reaktionen reagiert und damit die Gesamtgeschwindigkeit der Umesterung signifikant erhöht wird.

Die erfindungsgemäß vorgesehene Temperatur von bis zu etwa 320°C liegt darin begründet, dass, obwohl bei höheren Temperaturen, wie Versuche gezeigt haben, die Geschwindigkeiten des Umsatzes noch deutlich gesteigert werden können, bei Temperaturen über 320°C unter den erfindungsgemäß angewandten Bedingungen unerwünschte Nebenreaktionen, wie Cracking oder trans-Isomerisierung, stark in den Vordergrund treten. Daher ist erfindungsgemäß der Temperaturbereich eingeschränkt, es werden aber Reaktionstemperaturen eingesetzt, bei denen ein ausreichend hoher Umsatz für die Umesterung erzielt werden kann und gleichzeitig die unerwünschten Nebenreaktionen nur beschränkt oder überhaupt noch nicht auftreten.

Bei den erfindungsgemäß angewandten Temperaturen liegt im Reaktor ein Zweiphasengemisch vor, wobei die Unterschiede in den Dichten der beiden Phasen relativ gering sind. Durch geeignete erfindungsgemäße Auslegung des Reaktors gelingt es, die entstehenden Reaktionsprodukte im Reaktor abzutrennen und aus dem Reaktor auszubringen und unfertiges Reaktionsgemisch für eine vollständige Umsetzung im Reaktor zu halten. Einen wesentlichen Aspekt für eine ausreichende Reaktionsgeschwindigkeit und einen hohen Umsetzungsgrad im Reaktorrohr ist die Sicherstellung einer weitgehend laminaren Strömung im Bereich der Phasengrenzen im speziell ausgeführten Reaktorrohr bei gleichzeitig hoher Kontaktfläche für das ursprüngliche Emulsionsgemisch.

Durch umfangreiche Versuche konnte gezeigt werden, dass bei Vorliegen einer turbulenten Strömung im Reaktorrohr es nicht gelingt, ein mit Reaktionsprodukten ausreichend angereichertes Gemisch am Reaktorausgang zu gewinnen.

Die eine im Reaktorrohr vorliegende schwerere Phase enthält nach gewisser Betriebszeit des Reaktors hauptsächlich unvollständig umgesetztes Ausgangsmaterial und Glycerin. Um diese schwerere Phase in einer erfindungsgemäßen Variante ebenfalls einer Umsetzung zuführen zu können, müssen die für den Stoffaustausch an der Phasengrenze unter laminaren Strömungsbedingungen zur Verfügung stehenden Reaktionsflächen im Reaktor in ausreichender Menge vorhanden sein. Dies gelingt erfindungsgemäß durch eine erfindungsgemäße Anordnung von Reaktionsflächen im Reaktorinneren, deren Auslegung laminare Strömungsbedingungen und damit optimierte Reaktionsbedingungen ermöglicht.

Diese Reaktionsflächen können in unterschiedlicher Art und Weise ausgeführt werden, wobei in allen Fällen die nanoskalig strukturierten Oberflächen dieser Reaktionsflächen erfindungsgemäß dadurch gekennzeichnet sind, dass sie aufgrund, dünner festhaftender Schichten meist oxidischer Natur definierter geringer Dicke und Rauheit, die beim ersten, unter erfindungsgemäß definierten Betriebsbedingungen durchgeführten Anfahren des Reaktors ausgebildet werden, katalytisch wirksam ausgeführt sind. Erfindungsgemäß wird so durch geeignetes Anfahren des Reaktors mit einer Emulsion mit einem niedrigem Methanolgehalt (12 bis 15 Mol Methanol für 1 Mol Altspeiseöl) bei geringerer Strömungsgeschwindigkeit und bei Temperaturen bis zu 385°C für eine Zeit von bis zu 360 Sekunden erst die katalytische Wirksamkeit der Oberflächen generiert, der Prozess daher "autokatalytisch" bezeichnet werden kann. Die bei dieser erhöhten Temperatur entstehenden zusätzlichen Reaktionsprodukte werden mit den ersten Litern Biodieselgemisch aus dem Reaktor ausgetragen. Erfindungsgemäß werden Dicken der nanoskalig strukturierten Schichten zwischen 2 und 4000 nm und Mikrorauheiten in einer Dimension unter 500 nm zur Sicherstellung eines laminaren Strömungsverhaltens generiert und eingesetzt.

Die Materialauswahl für diese Reaktionsflächen erfolgt erfindungsgemäß unter dem Aspekt der Langzeitstabilität und der Langzeitwirksamkeit der definiert nanoskalig strukturierten und chemisch umgesetzten Oberflächen, wobei die chemische und physikalische Stabilität der strukturierten Oberflächen ein wesentliches Selektionskriterium darstellt. Speziell die chemische Stabilität der erfindungsgemäß nanoskalig strukturierten und autokatalytisch wirksamen Reaktionsflächen muss sichergestellt sein, da erfindungsgemäß keinerlei Abbauprodukte des Reaktormaterials oder Reste aus dem Reaktorinneren (der Reaktionsflächen) in das Endprodukt der Veresterung (Biodiesel) ausgeschleppt werden.

Als Materialien für die Reaktionsflächen werden erfindungsgemäß hochlegierte Edelstähle mit Anteilen von Chrom über 17% und von Nickel über 11%, wie z.B. SEL 4550 oder 4573, eingesetzt.

Die Reaktionsflächen können im Reaktor erfindungsgemäß als Platten in Längsrichtung mit Unterbrechungen und einer definierten Anzahl von Löchern oder als Rohre in Längsrichtung ebenfalls mit einer definierten Anzahl von Löchern oder als Spiralen aus Rohren oder Drähten mit einer definierten Anzahl von Wicklungen oder auch aus linear angeordneten Drähte oder Rohren oder auch aus einer Kombination dieser unterschiedlichen Anordnungen aufgebaut sein.

Als wesentliches Kriterium für die Auslegung des Verhältnisses zwischen Reaktordurchmesser und realer Gesamtfläche der Reaktionsflächen ist der gewünschte Volumenfluss der umzusetzenden Mischung aus freien Fettsäuren (Altspeiseöl) und dem eingesetzten Alkohol, wobei im Reaktor an den Reaktionsflächen erfindungsgemäß laminares Strömungsverhalten sichergestellt werden muss. Es ist bei dieser Auslegung zu berücksichtigen, dass die geometrische Oberfläche der Reaktionsflächen deutlich geringer ist als die erfindungsgemäß realisierte "autokatalytisch" wirksame, nanoskalig strukturierte reale Oberfläche der Reaktionsflächen.

Die Verhältnisse zwischen den geometrischen, katalytisch relevanten Flächen im Reaktorraum und den realen, katalytisch tatsächlich wirksamen Oberflächen bewegen sich zwischen mindestens zwei bis zu über 100, wobei sich erfindungsgemäß Werte zwischen fünf und fünfzig als besonders günstig erwiesen haben.

Bei erfindungsgemäßer Auslegung der Reaktionsflächen gelingt es, die Reaktions- und damit Verweilzeiten des Gemischs Alkohol-Fettsäuren überraschend kurz zu halten (unter 60 Sekunden) und somit eine kontinuierliche Produktion von Biodiesel aus Altfetten ohne Verwendung eines der Mischung zugesetzten katalytisch wirksamen Materials sicherzustellen.

### Beschreibung eines Beispiels

In einem Rührkessel wird aus dem vorgelegtem Altspeiseöl und Methanol eine Emulsion hergestellt, wobei Methanol etwa in einem molaren Überschuss von 35 bis 40 eingesetzt wird. Mittels einer geeigneten Pumpe wird die Emulsion auf einen Druck von 180 bar (18 MPa) verdichtet und mittels eines zweistufigen Wärmetauschers auf die Reaktionstemperatur, erfindungsgemäß bevorzugt 280°C, erhitzt. Anschließend wird die erhitzte Emulsion in einem Rohrreaktor einer Länge von 1200 mm und einem Innendurchmesser von 150 mm , dessen Inneres erfindungsgemäß mit einer ausreichenden Anzahl an Reaktionsflächen mit nanoskalig strukturierten Oberflächen ausgestattet ist, die durch das Anfahren des Reaktors mit einem Gemisch von 12 Mol Methanol und einem Mol Altfett bei einer Temperatur von 380°C in einer Zeit von 240 Sekunden gebildet wurden, reagieren gelassen, wobei eine gesamte Verweilzeit von etwa 0,5 bis 2 Minuten, bevorzugt unter 1 Minute, durch die Strömungsgeschwindigkeit der Emulsion eingestellt wird.
Das Produkt wird abgetrennt und noch nicht vollständig Reagiertes wird weiterhin im Reaktor gehalten, wobei es bei laminarer Strömung im Reaktor gelingt, in der schwereren Phase das Reaktionsprodukt Glycerin kontinuierlich anzureichern.

Das Rohprodukt, eine Mischung aus Glycerin, Roh-Biodiesel und Methanol, wird über einen Wärmetauscher aus dem Reaktor ausgetragen. Die rückgewonnene Wärme dient zur Erhitzung der Ausgangsemulsion.

Aus dem Gemisch Glycerin, Roh-Biodiesel und Methanol wird Methanol über einen Verdampfer zurückgewonnen. In einem weiteren Verfahrensschritt wird der Roh-Biodiesel vom Glycerin z.B. über eine Zentrifuge getrennt, anschließend über eine kontinuierliche Vakuumdestillation gereinigt und Gebinden zugeführt.

Glycerin wird ebenfalls zur Erhöhung der Reinheit destilliert und Gebinden zugeführt.

Bei erfindungsgemäßer Ausführung des Reaktors und Einhaltung der oben angegebenen Reaktionsbedingungen werden Umsetzungsgrade des verwendeten Altspeiseöl zu Biodiesel von bis zu 99% erreicht.

Eine Erhöhung der Reaktionstemperatur auf über 320°C führte zu einer signifikanten Zunahme der Nebenreaktionen, vor allem "Cracking" und Zersetzung der freien Fettsäuren.

## Patentansprüche

1. Verfahren zur kontinuierlichen Herstellung von Biodiesel durch Umesterung einer Altspeiseöl-Methanol-Emulsion mit einer Zusammensetzung von 20 Mol bis 50 Mol Methanol pro Mol Altspeiseöl, insbesondere von 38 Mol bis 42 Mol Methanol pro Mol Altspeiseöl, in einem Reaktor,
wobei zuerst im Inneren des Reaktors unmittelbar auf eingebauten metallischen Reaktionsflächen aus Edelstahlmaterial mit einem Chromgehalt > 17% und einem Nickelgehalt > 11% durch den Erstkontakt und die Reaktion zwischen dem metallischem Reaktormaterial und einer Altspeiseöl-Methanol-Emulsion mit einer Zusammensetzung von 12 bis 15 Mol Methanol pro Mol Altspeiseöl bei einer Temperatur von bis zu 385°C und Verweilzeiten des Gemisches im Reaktor von bis zu 360 Sekunden nanoskalig strukturierte und autokatalytisch wirksame Oberflächen mit Schichtdicken zwischen 2 nm und 4000 nm ausgebildet werden, wobei zur Einstellung eines laminaren Strömungsverhaltens der Altspeiseöl-Methanol Emulsion bei der Umesterung die an den metallischen Reaktionsflächen ausgebildeten autokatalytisch wirksamen Oberflächen eine größere reale Oberfläche aufweisen als die geometrische Oberfläche der metallischen Reaktionsflächen.

2. Verfahren nach Anspruch 1, **dadurch gekennzeichnet, dass** die Reaktions-und Verweilzeit der Altspeiseöl-Methanol-Emulsion im Reaktor zwischen 20 Sekunden und 400 Sekunden, insbesondere unter 60 Sekunden, beträgt,
wobei in einem weiteren Verfahrensschritt die Altspeiseöl-Methanol-Emulsion auf einen Druck von 25 bis 31 MPa verdichtet und in den beheizten Reaktor geleitet und auf eine Temperatur zwischen 250°C und 320°C, bevorzugt zwischen 260°C und 310°C, erhitzt wird.

3. Verfahren nach Anspruch 1 oder 2, **dadurch gekennzeichnet, dass** im Reaktor plattenförmige Reaktionsflächen in Längsrichtung mit Unterbrechungen und einer definierten Anzahl an Löchern eingesetzt werden.

4. Verfahren nach Anspruch 1 oder 2, **dadurch gekennzeichnet, dass** im Reaktor rohrförmige Reaktionsflächen in Längsrichtung mit einer definierten Anzahl an Löchern eingesetzt werden.

5. Verfahren nach Anspruch 1 oder 2, **dadurch gekennzeichnet, dass** im Reaktor die Reaktionsflächen als Spiralen aus Rohren oder Drähten mit einer definierten Anzahl von Wicklungen oder aus linear angeordneten Drähten oder Rohren aufgebaut sind.

6. Verfahren nach einem der Ansprüche 1 bis 5, **dadurch gekennzeichnet, dass** die an den metallischen Reaktionsflächen ausgebildeten autokatalytisch aktiven Oberflächen eine um einen Faktor 5 bis 50 größere reale Oberfläche aufweisen als die geometrische Oberflächen der metallischen Reaktionsflächen.

## Claims

1. Method for the continuous production of biodiesel through transesterification of a(n) used cooking oil / methanol emulsion with a composition of 20 mol to 50 mol methanol per mol of used cooking oil, in particular of 38 mol to 42 mol methanol per mol of used cooking oil, in a reactor,
wherein nanoscale-structured and autocatalytically acting surfaces with layer thicknesses of between 2 nm and 4,000 nm are formed first in the interior of the reactor directly on installed metallic reaction surfaces made of stainless steel material with a chrome content of > 17% and a nickel content of > 11% through the initial contact and the reaction between the metallic reactor material and a(n) used cooking oil / methanol emulsion with a composition of 12 to 15 mol of methanol per mol of used cooking oil at a temperature of up to 385°C and holding times for the mixture in the reactor of up to 360 seconds,
wherein the autocatalytically acting surfaces formed in the metallic reaction surfaces have a larger real surface than the geometric surface of the metallic reaction surfaces for setting a laminar flow behaviour of the used cooking oil / methanol emulsion during transesterification.

2. Method according to claim 1, **characterised in that** the reaction and holding time of the used cooking oil / methanol emulsion in the reactor is between 20 seconds and 400 seconds, in particular below 60 seconds,
wherein the used cooking oil / methanol emulsion is compressed to a pressure of 25 to 31 MPa and led into the heated reactor in a further method step, and is heated to a temperature of between 250°C and 320°C, preferably between 260°C and 310°C.

3. Method according to claim 1 or 2, **characterised in that** plate-shaped reaction surfaces are used in the reactor in longitudinal direction with interruptions and a defined number of holes.

4. Method according to claim 1 or 2, **characterised in that** tubular reaction surfaces are used in the reactor in longitudinal direction with a defined number of holes.

5. Method according to claim 1 or 2, **characterised in that** the reaction surfaces in the reactor are constructed from tubes or wires with a defined number of windings or from linearly arranged wires or tubes.

6. Method according to one of the claims 1 to 5, **characterised in that** the autocatalytically active surfaces formed on the metallic reaction surfaces have a real surface that is larger than the geometric surfaces of the metallic reaction surfaces by a factor of 5 to 50.

## Revendications

1. Procédé de fabrication en continu de biodiesel par transestérification d'une émulsion d'huiles comestibles usagées et de méthanol ayant une composition de 20 à 50 moles de méthanol par mole d'huiles comestibles usagées, en particulier de 38 à 42 moles par mole d'huiles comestibles usagées, dans un réacteur,
où des surfaces structurées à l'échelle nanométrique et efficaces autocatalytiquement avec des couches d'une épaisseur entre 2 et 4000 nm sont d'abord formées à l'intérieur du réacteur immédiatement sur des surfaces de réaction métalliques intégrées en acier inoxydable avec une teneur en chrome de >17 % et une teneur en nickel de >11% par le premier contact et la réaction entre le matériau métallique du réacteur et une émulsion d'huiles comestibles usagées et de méthanol ayant une composition de 12 à 15 moles de méthanol par mole d'huiles usagées à une température allant jusqu'à 385 °C et avec un temps de séjour du mélange dans le réacteur allant jusqu'à 360 secondes, où, pour établir un comportement d'écoulement laminaire de l'émulsion d'huiles comestibles usagées et de méthanol lors de la transestérification, les surfaces structurées à l'échelle nanométrique et efficaces autocatalytiquement présentent une surface réelle plus grande que la surface géométrique des surfaces de réaction métalliques.

2. Procédé selon la revendication 1, **caractérisée en ce que** le temps de réaction et de séjour de l'émulsion d'huiles comestibles usagées et de méthanol est entre 20 et 400 secondes, en particulier moins de 60 secondes,
où, au cours d'une autre étape de procédé, l'émulsion d'huiles comestibles usagées et de méthanol est comprimée à une première pression de 25 à 31 MPa et conduite dans le réacteur chauffé et réchauffée à une température entre 250 °C et 320 °C, de préférence entre 260 °C et 310 °C.

3. Procédé selon la revendication 1 ou 2, **caractérisé en ce que** les surfaces de réaction en forme de plaque sont placées dans le réacteur dans le sens longitudinal à des intervalles et avec un nombre défini de trous.

4. Procédé selon la revendication 1 ou 2, **caractérisé en ce que** les surfaces de réaction tubulaires sont placées dans le réacteur dans le sens longitudinal avec un nombre défini de trous.

5. Procédé selon la revendication 1 ou 2, **caractérisé en ce que** les surfaces de réaction sont construites dans le réacteur sous forme de spirales en tubes ou fils avec un nombre défini d'enroulements ou sous forme de fils ou tubes ordonnés de façon linéaire.

6. Procédé selon l'une quelconque des revendications 1 à 5, **caractérisé en ce que** les surfaces actives autocatalytiquement formées sur les surfaces de réaction métalliques présentent une surface réelle plus grande que les surfaces géométriques des surfaces de réaction métalliques d'un facteur 5 à 50.
